# EUROPEAN PATENT SPECIFICATION

(11) **EP 3 222 603 B1**
(45) Date of publication and mention of the grant of the patent: **17.06.2020**
(21) Application number: 15772034.3
(22) Date of filing: 12.08.2015
(51) Int. Cl.: C05D 9/00

(54) **METHOD FOR PRODUCING A MINERAL FERTILISER**
VERFAHREN ZUR HERSTELLUNG VON MINERALDÜNGER
PROCÉDÉ DE PRODUCTION D'ENGRAIS MINÉRAL

(30) Priority: 17.11.2014 UA 201412342
(43) Date of publication of application: 27.09.2017
(73) Proprietor: Bolsunow, Paul, 10789 Berlin (DE)
(72) Inventor: ABRAMOV, Serhii, Torez (UA)
(74) Representative: Müller & Schubert
(86) International application number: PCT/UA2015/000072
(87) International publication number: WO 2016/080941

(56) References cited:
- WO-A1-99/19274
- WO-A1-2014/077730
- WO-A1-2014/158010
- CN-A- 1 088 565
- CN-A- 1 100 708
- GB-A- 191 424 778

## Description

### Technical field

The invention relates to the production of fertilisers and can be used in the production technology of coated granular fertilisers containing nitrogen and/or phosphorus and/or potassium nutrients.

### State of the art

WO 2014/158010 A1 discloses a method for obtaining fertilisers coated with glauconite. GB 24778 A discloses that the growth of plants is improves by treating the soil with wholly or partly magnetic iron oxide. WO 99/19274 A1 discloses magnetised organic fertilisers containing powdered ash and other fertilising agents, wherein the powdered ash is polarised under a high voltage electrostatic field.

### Background

One of the problems for more efficient use of fertilisers in agriculture is to prevent losses of available fertiliser nutrients for plants during their transportation, storage and use.

The main reasons for these losses are:
- gaseous emissions of the fertiliser nutrients to the atmosphere due to denitrification that makes them unavailable for plants; such gaseous emissions of nutrients are primarily characteristic for nitrogenous fertiliser; it is known that due to the high mobility of the nitrogen compounds in the fertilisers caused by denitrification (gaseous losses), their losses reach more than 50%;
- leaching of fertilisers caused by precipitations and by irrigation waters, that transfer the available nutrients for plants into those soil horizons which are inaccessible to the root system of plants; leaching of soluble nitrates and ammonium salts from the soil profile (migration of nitrogen) is particularly intense in the irrigated areas; nutrient losses due to these reasons, in the rice fields for instance, reach up to 70 -80%;
- conversion of soluble and available nutrients for plants into insoluble substances, which are inaccessible for plants (retrogradation); when phosphate and potash fertilisers are applied into the soil, almost 70% of the nutrients were converted into the insoluble for plants indigestible solids.

Said problems are solved advantageously by coating the surface of the granular fertilisers by special protective coatings for providing controlled (delayed) release of fertiliser nutrients into the soil over time in the doses required for plant nutrition. Fertilisers with a stretched period of time of release of nutrients into the soil are so called long-acting fertiliser. The application of protective membranes on the surface of the fertiliser granules is usually carried out by known techniques of coating granules.

An example of a sustained-release fertiliser with a protective coating, providing a controlled (delayed) release of nutrients into the soil is a fertiliser with pre-coated controlled release of nutrients and its production method, known from the Russian patent number 2,212,134, IPC A01N 25/08, A01N 25/10, C05G 3/00, filing date 09.06.1999.

The invention can be used to obtain separate compositions of fertiliser nutrient granules (e.g. NPK granules) with an outer coating providing a sustained action of fertilisers (controlled release nutrients).

The fertiliser is obtained from nutrient granules for which the pre-coat layer is applied from a vegetable oil, for example, crude linseed oil and an outer polymeric coating is made in form of capsules. Pre-coating can comprise a binder, such as powdered clay and the desiccant. The application of pre-coating provides more desirable characteristics of a controlled (delayed) release of nutrients at a lower weight fraction of the outer polymer coating.

Using long-acting fertiliser controlling the release of nutrients is a promising direction in crop farming techniques, because they have a number of significant advantages over the use of conventional fertilisers, namely:
- losses of nutrients from fertilisers are reduced, ecological condition of territories, where these fertilisers are applied, is improved;
- losses of nitrogen from the soil are reduced due to the inhibition of the denitrification processes;
- effect of local toxicity from excessive amounts of nutrients in the soil is avoided;
- single application of mineral fertilisers in large quantities without additionally fertilizing during the growing season becomes possible, which significantly reduces the complexity of farming and increases the overall profitability of production;
- enables the widespread use of innovative cropping systems (no till, mini till) providing a single application of mineral fertilisers.

In the farming practices of crop, the technology of growing plants with the impact of weak (low potential) artificial magnetic fields, including static magnetic field, on the soil, fertilisers, seeds and plants during their growing season, are widely used. Exposure to a magnetic field provides an improve of germination energy, acceleration of the phase of plant development, an improve of the performance of plants and the quality of agricultural products.

The following are examples, in which artificial magnetic fields in crop farming techniques are used.

A method of growing plants is known according to the USSR copyright certificate number 1026708, IPC A01G 7/04, filing date 04.02.1981. The method includes preparing the soil, sowing seeds and caring for plants, while the prepared soil before sowing the seeds is exposed to a constant magnetic field.

The method is as follows. The soil is placed between the poles of the electromagnet and held for 3 - 5 minutes. Afterwards, the seeds are sown into the soil. The magnetic field is selected in the range of 1500 - 3500 E. When voltage is 3500 E, the soil reaches magnetic saturation, with a voltage of 1500 E, the magnetization of the soil is 85% of the magnetic saturation. Remanence of the soil for 6 months is reduced by 17 - 50% depending on the type of soil. Soil moisture plays no significant role in the formation and dynamics of the residual magnetization.

The application of the method provides an improvement in the energy of seed germination, plant productivity is increased up to 19%, phases of plant development are accelerated.

A method of tillage in the process of seeding and the device for its implementation are known according to the USSR copyright certificate number 1771589, IPC A01G 7/04, filing date 25.06.1990. Seeds are admixed with ferromagnetic particles before sowing and are passed between the poles of the electromagnets while sowing. Magnetic lines of force permeate the soil and the seeds, which are embedded in the soil. This increases the strength of the local magnetic field around the magnetic components of the soil, as well as changes the biochemical processes in the seeds to the positive side for growth and the formation of plants. Soil and ferromagnetic particles, which have become permanent magnets after passing through the magnetic field, and adhered to the seeds, keep magnetization for 5 - 6 months. The size of ferromagnetic particles should be small, but higher than the critical value (100 Å for iron, 150 Å nickel etc.), because if the size of these particles is less than critical, they will lose their magnetic properties. Seeds and soil components moving in a magnetic field necessarily intersect the portion of the magnetic field, wherein the impact on the seeds and soil is greatest. The parameters of the magnetic field are set for specific seeds or a specific soil. The presence of ferromagnetic particles in the soil provides magnetization of these micro magnets in ongoing field work, thereby constantly maintaining conditions favorable for plant growth. It is enough to install the field units of magnetic field sources.

An apparatus for implementing the method comprises seeding drum, blade, conducting seed channel, at the end of which pole pieces of a magnet are installed directly near the ground and acts on the seeds moving between said pieces, on the seeds lying in the soil and on the soil itself. The magnetic field is up to 3600 E.

Application of the method provides an improvement of the energy of seed germination, acceleration of growth and formation of plants.

A method of growing crops is known according to the USSR copyright certificate number 1531879, IPC A01V 79/02, filing date 12/28/1987. The method involves placing the plate-like magnets with a gradient magnetic field, with a magnetic induction of 0.01 - 0.03 T (Tesla), into the soil under the plants on the perimeter of the largest root mass.

As a result, the root growth in the fertile horizons is intensified that provides perennials to be grown in soils with little arable horizon at a close distance of groundwater or saline groundwater layers.

A method of growing crops is known according to the RF patent number 2110910, IPC A01G 7/04, A01C 1/00, filing date 25.10.1996. The method involves the cultivation of seedlings followed by planting them into the ground and exposure to a magnetic field, wherein the exposure to the magnetic field of the seeds is performed before sowing, at least once, as well as before planting the seedlings into the ground. The magnetic field generated by the system based on permanent magnets with magnetic induction of 30 - 120 mT is used. The treatment of the seed and seedling by magnetic field is performed by taking the phases of the moon on the date of processing of seeds and seedlings into account.

The method allows to get a full crop in mass production of plants in regions with high-risk conditions for agriculture, to reduce energy intensity and to improve the ecology of the crop.

A method of pre-sowing treatment of crops is known according to RF patent number 2261574, IPC A01C 1/00, filing date 05.05.2004. The seeds are treated by the magnetic field before sowing, said seeds being passed twice through the active working area (NS) of magnets .The method is as follows: double magnetic system with the active working area (NS) is set to output standard handling conveyors that transport processed seeds. At the same time the variable polarity of (NS) magnet is abided, the gradient of the magnetic field is from 2 • 10⁻¹ to 5 • 10⁺¹ T/m.

Pre-treatment of seeds in the magnetic field increases seed germination up to 1 - 5,8%, the intensity of the spring growth up to 1 - 14%, and the yield up to 0,7 - 6,4 kg/ha.

Material for accelerating the growth of plants is known from RF patent number 2113781, IPC A01G 7/04, filing date 26.09.1996. The material is carried out in the form of a magnetic substance coated with a polymer composition. On appearance, this material is a granule with a diameter of 1 - 10 mm or a thread-like product. A core of the granule or a core of the thread is made of a magnetic substance, which is coated with a protective layer, for example a varnish, polyethylene, polypropylene or other polymer composition. Particles having magnetic or ferromagnetic materials are used as the magnetic substance, followed by magnetization after manufacturing granules or threads. When planting granules (threads), they are placed into the soil in such a way that the bulk of the roots are close to the granules. In practice, granules (threads) are simply mixed with earth and plants are planted.

The use of this material makes it possible to accelerate the build-up of green mass, to increase seed germination, to accelerate ripening.

A method of producing a magnetic material for soil improvement is known according to Japanese Patent Application number 2002033231, IPC C05G 5/00, filing date 14.07.2000. Powder of magnetic material is mixed with a biodegradable plastic and is formed in the form of rods, granules or sheets, and is magnetized.

Magnetic material, which is placed into the soil, stimulates the growth of plants and does not require further utilization that is caused by natural degradation of the material in the soil.

Ways of influencing the magnetic field on fertilisers, which are introduced into the soil, are known. An example is the method of stimulating the growth of plants under the patent of the Russian Federation No. 2172100, IPC A01G 7/04, filing date 27.12.1999. The method comprises introducing magnetized substances into the soil, such as magnetized phosphates are used, which are difficultly soluble. Difficultly soluble phosphates, e.g. calcium salt powder Ca₃(PO₄)₂, before being incorporated into the soil are once passed through a magnetic unit made in form of a tube with a length of 80 cm, wherein the magnets, which create a weak magnetic field, are helically mounted,. The magnetic field strength is 40 E. The magnetization is performed by shifting the difficultly soluble phosphates through the magnetic tube at a rate of free fall.

The method allows to improve the efficiency of insertion into the soil of poorly soluble phosphates and enhances the productivity of crops.

It is possible to cite other examples of the use of artificial magnetic fields in farming techniques, which provide an increase in vigor and growth of crop seed, of the rate of accumulation of green matter, of reducing the time of ripening fruits and the increase in yield per unit area, etc. The most important feature of these technologies is their environmental friendliness, as in the process of magnetic treatment the natural balance of minerals and organisms in the soil is not disrupted.

Thus, a promising way of improving the fertiliser resulting from the analysis of the prior art is providing a fertiliser with a controlled (delayed) release of nutrients over an extended period at doses which are enough to feed plants, as well as the impact on the fertiliser by physical factors, such as magnetic fields, in order to improve the efficiency of the fertilisers.

The manufacturing technology granular fertiliser "Agroprotektor", known according to the patent in Ukraine for invention number 96506, the IPC C05G 5/00, C05B 19/00, C05C 11/00, C05D 1/00, filing date 30.03.2010, is selected as prototype.

Granular fertiliser contains a core comprising nitrogen or phosphorus, or potassium nutrients, or a combination thereof (see N, P, K, NP, NK, RK NPK fertiliser granules). The core is covered with a protective sheath based on an inorganic substance. The natural phosphor-glauconite agglomerate is used as the inorganic substance. For the formation of the protective sheath with the necessary mechanical and physico-chemical characteristics, the natural phosphorus-glaucoma agglomerate is previously pulverized into a homogeneous powder. A binder, that is an aqueous solution of potassium or nitrogen fertilisers, or their combination, is added to the particulate phosphorus-glauconite agglomerate as a base substance of sheath. The concentration of said solution is 30,0 - 85,0%, and the content of it in the sheath, as a binder, is 1.0 - 10.0 wt. % by weight of phosphorus-glauconite agglomerate. These relationships provide the necessary mechanical characteristics of the sheath and the whole granule.

The sheath is 10 - 90 wt. % of fertiliser granules that is primarily determined by the characteristics of the soil, which is used under the fertiliser, as well as by the content of the granule core and culture, which is powered by this fertiliser.

The binder liquid and the natural phosphor-glauconite agglomerate are applied onto the surface of the granules of mineral fertiliser until they will be coated with a sheath of specified size, followed by curing. Applying the composition of sheath on the surface of the granules is performed by known techniques, such as pan coating fertiliser granules or by adhesion. Technologically this operation is carried out in the granulator, for example plate type. Spraying the binder onto fertiliser granules occurs in a granulator through a sprayer, with the simultaneous rolling of the granules in powdery phosphorous-glauconite agglomerate. The process is continued until the granules will be covered with a sheath of predetermined dimensions.

The granular fertiliser with said sheath is a long-acting fertiliser, which prevents the loss of valuable components by evaporation, leaching, degradation of valuable components into forms that are unavailable for plants. Mechanical and physical properties of the fertiliser granules prevent destruction of the granules, dust formation, swelling, caking and scattering of powder during storage, transport and use of fertiliser.

The effectiveness of the described fertiliser is determined by physical and chemical properties of phosphorus-glauconite agglomerate, allowing to realize the effect of long-acting fertiliser (slow release of fertiliser nutrients into the soil over a long period at doses required to power the plants). Other features of improving the efficiency of fertiliser are in this technology not used.

### Disclosure of invention

The basis of the invention is to improve a method for producing mineral fertilisers, this method being provided to improve the efficiency of fertiliser application due to the impact on the fertiliser, on the soil, on the planted seeds into the soil and on the plant during its growing season by additional physical factors, which contribute to the seed vigor, speeding up the phase of plant development, increasing plant productivity and quality of agricultural products.

This object is achieved by a method for producing mineral fertilisers, comprising application of the sheaths, based on glauconite, onto fertiliser granules, according to the invention. The fertiliser granules, which have been coated with the sheaths, are exposed to a treatment by an external magnetic field.

These features are essential features of the invention, as they are necessary and sufficient for achieving at the object.

The inventor used a property of the magnetic susceptibility of glauconite, which is determined by the content of ferromagnetic minerals in glauconite. Under magnetic susceptibility is a quantity characterizing the ability of a substance to be magnetized by an external magnetic field understood. Glauconite has a positive magnetic susceptibility, the absolute value of which reaches up to 10 ∼ 2 SI units. In other words, glauconite under the influence of an external magnetic field acquires residual magnetization (physical quantity characterizing the magnetic state of the physical body), which means that it becomes a source of a secondary magnetic field coinciding with the direction of the external magnetic field, whose intensity increases with the intensity of the external magnetic field. Glauconite magnetization is maintained for a long time - reducing the magnetization of glauconite to 75% of the original occurs within 6 - 10 months. This is sufficient for the magnetic effect on the biological processes of the plant during it's growing season.

The secondary magnetic field of the residual magnetization of glauconite affects the fertiliser nutrients, and when fertilizing the soil it affects on the soil, on the nutrients of the soil, on plants and seeds, on the plant during the growing season

The influence of magnetic field on the soil improves soil micro-unit properties by increasing the intensity of the local magnetic fields around the magnetically active components of the soil.

Uptake of nutrients, derived from the soil solutions, by plants provides feeding nutrients through the root system into the plant cells. Nutrient components in the soil solution (soil complex) are in the state of ions, which in most cases cannot diffuse over large distances without the danger of irrevocable absorbing by soil complex. In other words, if the root system of a plant is not located close enough to take up nutrient ions from the soil into the root of the plant, the soil nutrients are absorbed by soil complex, because they cannot exist as free ions for a long time in the conditions of the soil. As a result the permanent loss of fertiliser nutrients occurs. The influence of weak magnetic fields increases the mobility of the ions and the nutrient intake into the plant cells. Besides, the effect of the magnetic field increases the solubility of nutrients (increases the number of free ions) due to changes in the orientation of molecules in the magnetic field and accelerates some lingering chemical reactions involving free radicals.

The influence of the magnetic field on seeds is expressed in increasing the seed vigor and germination.

The influence of magnetic field on the plant during the growing season contributes to the accumulation of green mass, acceleration of development phases, improvement of productivity and quality of fruit plants.

As glauconite, which is the basis of the sheath, it is advisable to use natural phosphorus-glauconite agglomerate enriched to the extent of 75 - 95 % of the content of glauconite.

Optimal conditions occur when the external magnetic field is in the range of 2000-3000 E, and the exposure time of the magnetic field on the fertiliser granules is in the range of 1 - 2 minutes.

### Brief description of drawings.

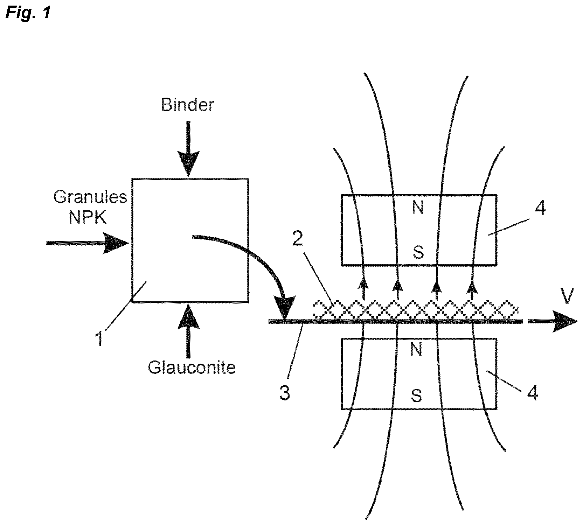

Specification of the claimed process for producing mineral fertilisers is given with reference to the appended Fig. 1, that is a diagram of the method.

### Implementation of the invention.

The method for producing a granular fertiliser is implemented as follows.

The method comprises coating the sheaths based on glauconite onto the fertiliser granules followed by the treatment by the constant magnetic field of the granules coated with the sheaths.

As glauconite, which is the basis of the sheaths, the natural phosphorus-glauconite agglomerate, enriched to the extent of 75 - 95% of the content of glauconite, is used.

Tensions of external constant magnetic field is selected within a range of 2000 - 3000 E, and the time of the treatment by magnetic field of the granules is in a range of 1 - 2 minutes.

An external magnetic field is created by permanent magnets or electromagnets.

Fertiliser granules (known N, P, K, NP, NK, PK, NPK fertiliser granules) as feedstock are fed to the glauconite granule coating site 1. To the same site 1, the glauconite, which is the basis of the sheaths of granules is fed in the form of natural phosphate-glauconite agglomerate, enriched to the extent of 75-95% glauconite content, as well as a binder is fed in the form of an aqueous solution of potassium or nitrogen fertilisers, or their combinations. The concentration of said binder solution is 30 - 85%, and the content of it in the sheath as the sheath binder is 1.0 - 10.0 wt. % of the phosphorus-glauconite agglomerate, which is the base of the sheath. Phosphorus-glauconite agglomerate is previously adust into a homogeneous powder.

Coating sheaths onto the surface of the granules is performed by known techniques, such as the coating by panning of fertiliser granules or by adhesion of the composition of the sheath on the surface of the granule. This operation is simply and technologically performed in the granulator, for example a plate granulator. In the granulator the spraying of the binder is made onto fertiliser granules; this spraying is performed through a sprayer; the simultaneous rolling of granules in a powdery phosphorous-glauconite agglomerate, which is continuously fed to the granulator, occurs. The method is continued as long until the granules of with a protective sheath of predetermined dimensions will be obtained.

The sheath is 10 - 90% by weight of fertiliser granules. This relationship is primarily determined by the characteristics of the soil, which is used for the application of the fertiliser, as well as by the content of granules and by culture, which is powered by this fertiliser.

The fertiliser granules 2 coated with sheaths from the site 1 are transmitted to the conveyer belt 3, which is made of diamagnetic material and moves between the opposite poles of the permanent magnets 4 at a speed V. Said granules coated by the glauconite sheaths are treated by a constant magnetic field. The intensity of the magnetic field between the opposite poles of the permanent magnets 4 in the movement area of the conveyor belt 3 with the granules 2 is 2000 - 3000 E, the residence time of granules 2 in the magnetic field is determined by the speed V of the conveyor belt 3 and is 1 - 2 minutes.

An external magnetic field is created by permanent magnets or electromagnets 4, between the opposite poles N, S, in which the conveyor belt 3 with the fertiliser granules 2 moves.

The constant magnetic field magnetizes glauconite sheath of granules, the residual magnetic field, which affects the nutritional components of fertiliser, while fertilizing the soil affects the soil, the soil nutrients, the seeds and the plants during the growing season by which the ion mobility of nutrient components and their delivery into plant cells increases, properties of soil micro aggregates are improved, germination energy of seeds and their rises increases, accumulation of green mass and phases of plant growth are accelerated, productivity and quality of fruit plants increases.

The effectiveness of the claimed method for producing mineral fertilisers is confirmed by experiments of sunflower growing - sort of "Prometheus", of soy growing - sort of "Sprint", of spring rape growing - Class "Ataman" with use of mineral fertilisers, produced in accordance with the claimed method. The results are shown in Table I.

**Table 1**

| Order Nº | Technology growing | Mass of 1000 seeds of g. | Productivity, t / ha. |
|---|---|---|---|
| Sunflower, grade "Prometheus" | | | |
| 1 | Cultivation using granular NPK fertilizer glauconite sheath treated magnetic field in accordance with the claimed method | 73 | 3,1 |
| 2 | Control of: cultivation using granular NPK fertilizer with glauconite sheath without processing the magnetic field | 65 | 2,6 |
| 3 | % (+,-) | +12% | + 19% |

| Soybeans cultivar "Sprint" | | | |
|---|---|---|---|
| 4 | Cultivation using granular NPK fertilizer glauconite sheath treated magnetic field in accordance with the claimed method | 138 | 2,7 |
| 5 | Control of: cultivation using granular NPK fertilizer with glauconite sheath without processing the magnetic field | 120 | 2,3 |
| 6 | % (+,-) | +15% | +17% |

| Spring rape cv "Ataman" | | | |
|---|---|---|---|
| 7 | Cultivation using granular NPK fertilizer glauconite sheath treated magnetic field in accordance with the claimed method | 3,9 | 2,9 |
| 8 | Control of: cultivation using granular NPK fertilizer with glauconite sheath without processing the magnetic field | 3,3 | 2,5 |
| 9 | % (+,-) | +18% | +16% |

## Claims

1. A method for producing mineral fertilisers, comprising covering fertiliser granules with outer sheaths, which are based on glauconite, is **characterized in that**, the fertiliser granules, after coating them with the outer sheaths, are exposed to a treatment by a constant magnetic field, and wherein the intensity of the external magnetic field is selected within the range of 2000 - 3000 E, and the exposure time of the magnetic field on the fertiliser granules is in the range of 1 - 2 minutes.

2. The method of claim. 1, is **characterized in that**, the glauconite used, as base of the sheaths, is a natural phosphorous-glauconite agglomerate that is enriched to the extent of 75 - 95% of content of glauconite.

3. The method of claim 1, is **characterized in that**, the external magnetic field is generated by permanent magnets or electromagnets.

## Patentansprüche

1. Verfahren zur Herstellung von Mineraldüngern, umfassend das Bedecken von Düngemittelgranalien mit Außenhüllen, welche auf Glaukonit basieren,
das **dadurch gekennzeichnet ist, dass** die Düngemittelgranalien, nachdem sie mit den Außenhüllen bedeckt sind, einer Behandlung mit einem konstanten Magnetfeld ausgesetzt werden,
und worin die Intensität des externen Magnetfeldes ausgewählt ist innerhalb eines Bereichs von 2000 - 3000 E, und die Expositionszeit des Magnetfeldes auf die Düngemittelgranalien im Bereich von 1 - 2 Minuten liegt.

2. Verfahren, nach Anspruch 1, das **dadurch gekennzeichnet ist, dass** das Glaukonit, das als Basis der Hüllen verwendet wird, ein natürliches Phosphor-Glaukonit-Agglomerat ist, das bis zu einem Ausmaß von 75 - 95 % des Gehalts an Glaukonit angereichert ist.

3. Verfahren, nach Anspruch 1, **dadurch gekennzeichnet, dass** das externe Magnetfeld durch Permanentmagnete oder Elektromagnete erzeugt wird.

## Revendications

1. Procédé de production d'engrais minéraux, comprenant la couverture des granulés d'engrais avec des gaines externes, qui sont basées sur la glauconite, qui est **caractérisé en ce que**, les granulés d'engrais, après leur revêtement avec des gaines externes, sont exposés à un traitement par un champ magnétique constant, et l'intensité du champ magnétique externe étant choisie dans la plage de 2000 à 3000 E, et le temps d'exposition du champ magnétique sur les granulés d'engrais se situant dans la plage de 1 à 2 minutes.

2. Procédé selon la revendication 1, qui est **caractérisé en ce que**, la glauconite utilisée, comme base des gaines, est un agglomérat de glauconite phosphoreux naturel qui est enrichi au degré de 75 à 95 % de teneur de glauconite.

3. Procédé selon la revendication 1, qui est **caractérisé en ce que**, le champ magnétique externe est produit par des aimants permanents ou des électroaimants.
